# FASCICULE DE BREVET EUROPEEN

(11) **EP 4 551 437 B1**
(45) Date de publication et mention de la délivrance du brevet: **25.02.2026**
(21) Numéro de dépôt: 23736433.6
(22) Date de dépôt: 14.06.2023
(51) Int. Cl.: B60R 21/34, B60R 13/08

(54) **DOUBLURE INTERNE POUR CAPOT DE VÉHICULE AUTOMOBILE, CAPOT DE VÉHICULE AUTOMOBILE COMPORTANT UNE TELLE DOUBLURE INTERNE ET VÉHICULE AUTOMOBILE COMPORTANT UN TEL CAPOT**
INNENVERKLEIDUNGSTEIL FÜR EINE KRAFTFAHRZEUGHAUBE, KRAFTFAHRZEUGHAUBE MIT EINEM SOLCHEN INNENVERKLEIDUNGSTEIL UND KRAFTFAHRZEUG MIT EINER SOLCHEN FRONTHAUBE
INNER LINING FOR MOTOR VEHICLE BONNET, MOTOR VEHICLE BONNET COMPRISING SUCH AN INNER LINING AND MOTOR VEHICLE COMPRISING SUCH A BONNET

(30) Priorité: 06.07.2022 FR 2206881
(43) Date de publication de la demande: 14.05.2025
(73) Titulaire: Stellantis Auto SAS, 78300 Poissy (FR)
(72) Inventeur: GOURVENNEC, Thibault, 91210 Draveil (FR); PERON, Rodolphe, 95220 Herblay sur Seine (FR); BOUDAN, Julien, 91210 Draveil (FR); ROYER, Guillaume, 91680 Bruyeres le Chatel (FR)
(74) Mandataire: BCIP
(86) Numéro de dépôt international: PCT/FR2023/050861
(87) Numéro de publication internationale: WO 2024/009018

(56) Documents cités:
- EP-A1- 2 082 948
- DE-A1- 102014 015 536
- FR-A1- 2 911 842
- FR-A1- 2 974 557
- JP-A- 2007 223 433

## Description

### [Domaine technique]

L'invention a trait au domaine des véhicules automobiles, et concerne une doublure interne pour capot de véhicule automobile, un capot de véhicule automobile comportant une telle doublure interne et un véhicule automobile comportant un tel capot.

### [Etat de la technique antérieure]

Un capot de véhicule automobile comporte, de façon connue, un panneau externe, encore appelé « peau externe », formant le côté visible du capot, et un panneau interne de renfort, encore appelé « doublure interne ».

La peau externe et la doublure interne présentent des dimensions sensiblement identiques et sont fixées l'une par rapport à l'autre, d'une part, au niveau d'un bord périphérique du capot, par exemple par sertissage, ce qui permet de conférer au capot une certaine rigidité, et, d'autre part, à l'intérieur du bord périphérique, par exemple par des cordons de collage, assurant une liaison entre la peau externe et la doublure interne sur le reste de la surface du capot.

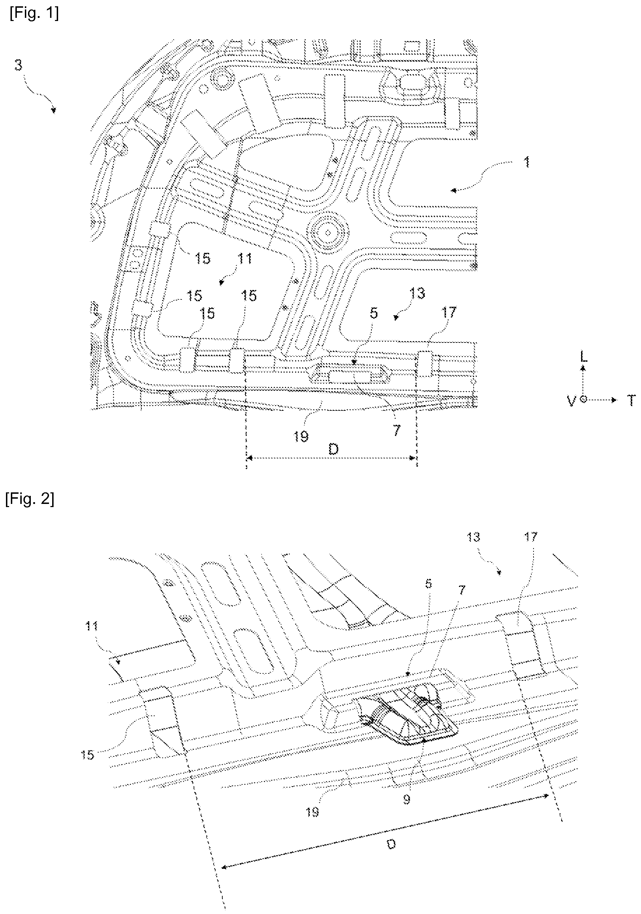

On a illustré à la figure 1 un exemple de réalisation de l'art antérieur d'une doublure interne 1 de capot 3, partiellement représentée en vue de dessus.

La doublure interne 1 reçoit, notamment, un dispositif d'insonorisation (non représenté), constitué d'une mousse de polyuréthane que l'on fixe sur la doublure interne 1 du capot.

Le positionnement de cette mousse d'insonorisation, et sa fixation préalable sur la doublure interne, sont facilités grâce à la présence de zones d'interfaçage 5, généralement au nombre de deux, réparties de façon symétrique par rapport à un axe longitudinal médian du capot 3 (une seule étant visible à la figure 1).

Chaque zone d'interfaçage 5 comporte une fente 7 s'étendant transversalement relativement à la doublure interne 1 du capot 3, dans laquelle est emmanchée une languette 9 (visible à la figure 2 illustrant la doublure interne 1 en vue isométrique arrière).

La languette 9 permet d'aider l'opérateur au bon positionnement de la mousse d'insonorisation et assure également un pré-maintien de la mousse d'insonorisation.

Afin de limiter la gravité d'un choc pouvant survenir avec un piéton, la doublure interne 1 est conçue pour se déformer en cas de choc.

A cet effet, la doublure interne 1 comporte des zones d'affaiblissement 11, 13 obtenues par des découpes 15, 17 de la doublure interne 1 respectivement ménagées de façon discontinue de part et d'autre de chaque zone d'interfaçage 5.

Ainsi, lors d'un choc avec un piéton, les découpes 15, 17 permettent à la doublure interne 1 de s'écraser plus facilement en raison de la discontinuité dans la structure engendrée par chaque découpe 15, 17, entraînant une déformation plus facile et plus systématique de la doublure 1 de capot, ce qui permet d'amortir le choc subi par le piéton et de lui éviter des blessures graves.

Toutefois, la distance D comprise entre la première découpe 15 de la zone d'affaiblissement 11 et la première découpe 17 de la zone d'affaiblissement 13 est relativement importante, créant ainsi une zone 19 de la doublure interne 1 qui ne comporte aucune zone d'affaiblissement.

Ainsi, la rigidité de la doublure interne 1 est augmentée au niveau de la zone 19 par rapport aux zones d'affaiblissement 11, 13 , ce qui limite la déformation du capot 3 lors d'un choc avec un piéton, augmentant par conséquent le risque d'infliger de graves blessures au piéton lors d'un choc. Un état d'art selon le préambule de la revendication 1 est divulgué par le document DE 10 2014 015 536 A1.

### [Exposé de l'invention]

La présente invention vise à surmonter les inconvénients précités, et concerne pour ce faire une doublure interne pour capot de véhicule automobile comportant :
- au moins une zone d'interfaçage, destinée à recevoir une languette d'aide au positionnement d'un dispositif d'insonorisation,
- une pluralité de zones d'affaiblissement comportant des découpes pratiquées dans ladite doublure interne de part et d'autre de ladite au moins une zone d'interfaçage,
ladite doublure interne étant remarquable en ce qu'elle comporte au moins une zone de découpe supplémentaire s'étendant depuis ladite au moins une zone d'interfaçage.

Ainsi, en prévoyant d'agencer une zone de découpe supplémentaire s'étendant depuis l'au moins une zone d'interfaçage, la zone comprise entre la première découpe de la première zone d'affaiblissement et la première découpe de la deuxième zone d'affaiblissement comporte, contrairement à l'art antérieur, une zone d'affaiblissement supplémentaire définie par la zone de découpe supplémentaire.

Ainsi, la rigidité de la doublure interne selon l'invention est réduite au niveau de la zone d'interfaçage destinée à recevoir la languette d'aide au positionnement du dispositif d'insonorisation, contrairement aux doublures internes de l'art antérieur qui ne sont pas structurellement affaiblies à cet endroit.

Cela permet très avantageusement d'augmenter la déformation du capot équipé d'une telle doublure interne lors d'un choc avec un piéton, réduisant ainsi considérablement le risque d'infliger de graves blessures au piéton lors d'un choc.

Selon des caractéristiques de la doublure interne de capot selon l'invention :
- ladite au moins une zone d'interfaçage comporte une fente s'étendant transversalement relativement à ladite doublure interne, et ladite au moins une zone de découpe supplémentaire s'étend depuis ladite fente ;
- la zone de découpe supplémentaire s'étend perpendiculairement relativement à ladite fente ;

Selon des caractéristiques optionnelles de la doublure interne de capot selon l'invention:
- ladite zone de découpe supplémentaire présente une forme géométrique sensiblement rectangulaire, dont la largeur est comprise entre environ 30 millimètres et environ 50 millimètres ;
- ladite zone de découpe supplémentaire présente une forme géométrique sensiblement rectangulaire, dont la longueur est comprise entre environ 40 millimètres et environ 55 millimètres ;
- ladite zone de découpe supplémentaire est pratiquée dans une pente d'emboutissage de la doublure interne ladite pente d'emboutissage reliant, d'une part, un rayon inférieur s'étendant sensiblement dans la continuité de ladite fente de manière sensiblement transversale, et, d'autre part, un rayon supérieur s'étendant de façon adjacente à une piste destinée à recevoir des cordons de collage destinés à assurer la liaison de ladite doublure interne avec une peau externe de capot ;
- dans une réalisation, la zone de découpe supplémentaire est pratiquée sur toute la longueur de ladite pente d'emboutissage ;
- dans une autre réalisation, la zone de découpe supplémentaire est pratiquée sur une portion de ladite pente d'emboutissage.

L'invention concerne aussi un capot de véhicule automobile comportant une peau externe et une doublure interne, ladite peau externe et ladite doublure interne étant fixées l'une par rapport à l'autre, remarquable en ce que ladite doublure interne est obtenue selon l'invention.

L'invention concerne également un véhicule automobile comportant un capot, remarquable en ce que ledit capot est obtenu selon l'invention.

### [Description des dessins]

D'autres caractéristiques, buts et avantages de l'invention apparaîtront à la lecture de la description détaillée qui suit pour la compréhension de laquelle on se reportera aux dessins annexés dans lesquels :
[Fig. 1] montre une doublure interne de capot selon l'art antérieur, partiellement représentée en vue de dessus.
[Fig. 2] illustre la doublure interne de l'art antérieur en vue isométrique.
[Fig. 3] est une vue de côté d'une partie avant d'un véhicule automobile selon l'invention.
[Fig. 4] est une vue isométrique du capot selon l'invention.
[Fig. 5] illustre la doublure interne du capot selon l'invention, vue de face.
[Fig. 6] est un agrandissement de la zone VI de la figure 5.
[Fig. 7] est une vue isométrique arrière de la doublure interne selon l'invention.

### [Description des modes de réalisation]

Dans la suite de la description, des éléments présentant une structure identique ou des fonctions analogues sont désignés par une même référence.

On adoptera par convention, à titre non limitatif, des orientations longitudinale, verticale et transversale indiquées par le trièdre direct (L, V, T) désignant les axes longitudinal, vertical et transversal du véhicule.

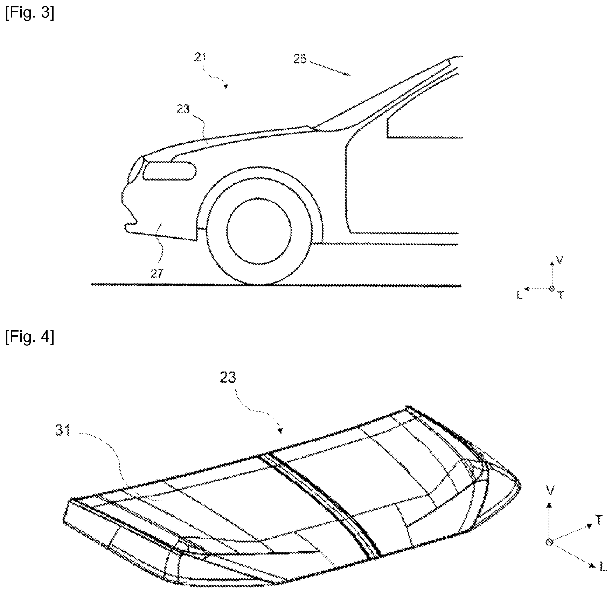

On se réfère aux figures 3 et 4 sur lesquelles on a respectivement représenté une partie avant d'un véhicule automobile 21 selon l'invention vu de côté, et un capot 23 selon l'invention, en vue isométrique.

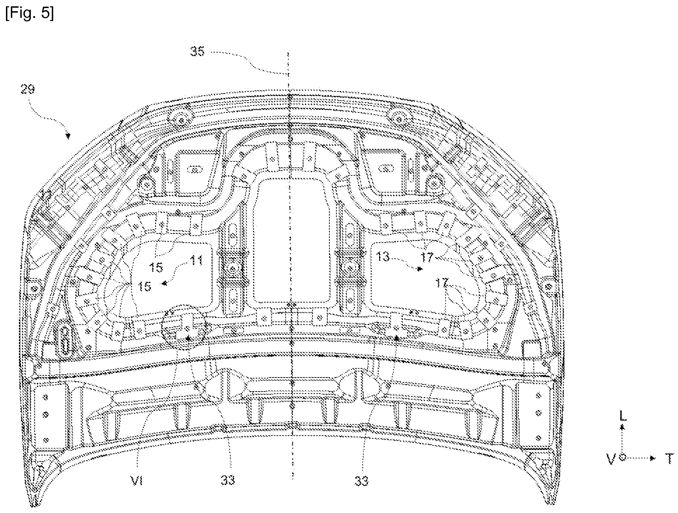

La partie avant du véhicule automobile 21 comprend le capot 23 selon l'invention, disposé en avant d'un pare-brise 25 et un pare-chocs 27. Le capot 23 comprend une doublure interne 29 (visible à la figure 5) et une peau externe 31.

La peau externe 31 du capot 23 et la doublure interne 29 ont des dimensions sensiblement identiques, ce qui permet de les superposer en disposant leurs périphéries l'une sur l'autre.

La peau externe 31 et la doublure interne 29 du capot 23 peuvent être réalisées par exemple en aluminium ou encore en acier.

On se réfère à la figure 5 sur laquelle on a représenté la doublure interne 29 du capot 23, vue de face.

La doublure interne 29 reçoit, notamment, le dispositif d'insonorisation (non représenté), par exemple constitué d'une mousse de polyuréthane, fixé sur la doublure interne 29.

Le positionnement du dispositif d'insonorisation, et sa fixation préalable sur la doublure interne 29, sont facilités grâce à la présence de deux zones d'interfaçage 33 réparties de façon symétrique par rapport à un axe longitudinal médian 35 du capot 23.

Les zones d'affaiblissement 11, 13 sont ménagées dans la doublure interne 29 de part et d'autre de chaque zone d'interfaçage 33.

Les zones d'affaiblissement 11, 13 sont par exemple obtenues par les découpes 15, 17 pratiquées de façon discontinue dans la doublure interne.

Les découpes 15, 17 ont pour but de permettre à la doublure interne 29 de s'écraser au niveau des zones d'affaiblissement 11, 13 lors d'un choc piéton, entraînant une déformation de la doublure interne 29.

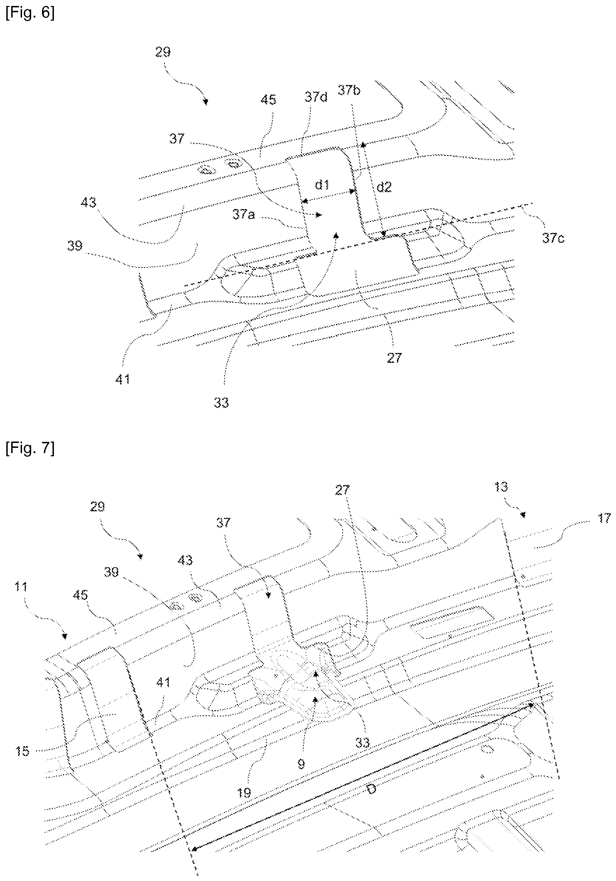

On se réfère aux figures 6 et 7 montrant respectivement un agrandissement de la zone VI de la figure 5 et la doublure interne 29 en vue isométrique arrière .

La fente 7 est pratiquée au niveau de la zone d'interfaçage 33 et s'étend transversalement relativement à la doublure interne 29 du capot 23.

La fente 7 présente une forme géométrique rectangulaire et est destinée à recevoir la languette 9.

La languette 9, permettant d'aider l'opérateur au bon positionnement du dispositif d'insonorisation du capot 23 et d'assurer un pré-maintien du dispositif d'insonorisation, est par exemple montée dans la fente 7 par emmanchement.

Selon l'invention, la doublure interne 29 comporte une zone de découpe 37 supplémentaire, s'étendant depuis la zone d'interfaçage 33.

Ainsi, grâce à l'invention, la zone 19 définie par la distance D comprise entre la première découpe 15 de la zone d'affaiblissement 11 et la première découpe 17 de la zone d'affaiblissement 13 comporte, contrairement à l'art antérieur, une zone d'affaiblissement supplémentaire définie par la zone de découpe 37 supplémentaire.

Ainsi, la rigidité de la doublure interne 29 selon l'invention est réduite au niveau de la zone 19 relativement aux doublures internes de l'art antérieur, ce qui permet très avantageusement d'augmenter la déformation du capot 23 lors d'un choc avec un piéton, réduisant ainsi considérablement le risque d'infliger de graves blessures au piéton lors d'un choc.

Dans une réalisation, la doublure interne 29 comporte une pluralité de zones de découpe 37 supplémentaires s'étendant chacune depuis chaque zone d'interfaçage 33.

Dans une réalisation, la zone de découpe 37 supplémentaire s'étend depuis la fente 27 de la zone d'interfaçage 33 de la doublure interne 29.

Selon une disposition, la zone de découpe 37 s'étend perpendiculairement relativement à la fente 27, c'est-à-dire parallèlement à l'axe longitudinal de la doublure interne 29.

La zone de découpe 37 adopte une géométrie polygonale, notamment sous forme de rectangle.

En variante, d'autres formes géométriques sont envisagées, notamment carrées, trapézoïdales, triangulaires.

Dans une réalisation, lorsque la zone de découpe 37 est rectangulaire, la largeur de la zone de découpe 37 est comprise entre 30 et 50 millimètres. On entend par « largeur » la distance transversale d1 comprise entre un premier bord longitudinal 37a de la zone de découpe 37 et un deuxième bord longitudinal 37b de la zone de découpe 37.

Dans une réalisation, lorsque la zone de découpe 37 est rectangulaire, la longueur de la zone de découpe 37 est comprise entre 40 et 55 millimètres.

On entend par « longueur » la distance longitudinale d2 comprise entre la droite transversale 37c (représentée en pointillés à la figure 6 et passant par le bord transversal supérieur de la fente 27) et un bord transversal 37d de la zone de découpe 37.

La zone de découpe 37 est pratiquée dans une pente d'emboutissage 39 de la doublure interne 29, la pente d'emboutissage 39 reliant un rayon inférieur 41 et un rayon supérieur 43 de la doublure interne 29, le rayon inférieur 41 s'étendant sensiblement dans la continuité de la fente 27 de manière sensiblement transversale, et le rayon supérieur 43 s'étendant de façon adjacente à une piste 45 destinée à recevoir des cordons de collage assurant la liaison entre la peau externe 31 et la doublure interne 29 sur la surface centrale du capot 23.

Dans la réalisation illustrée aux figures, la zone de découpe 37 est pratiquée sur toute la longueur de la pente d'emboutissage 39, c'est-à-dire que la zone de découpe 37 s'étend depuis la fente 27 jusqu'à la piste 45 destinée à recevoir des cordons de collage.

Ainsi, la zone de découpe 37 s'étend depuis la fente 27, s'étendant sensiblement dans la continuité du rayon inférieur 41, puis elle traverse la pente d'emboutissage 39 et le rayon supérieur 43.

La rupture de continuité entre le rayon inférieur 41 et le rayon supérieur 43 au niveau de la zone de découpe 37 permet ainsi à la doublure interne 29 de s'effondrer facilement au niveau de la zone de découpe 37 lorsqu'un effort est exercé sur la peau externe 31 (visible à la figure 4), effort pouvant survenir en cas de choc piéton, notamment par l'action de la tête d'un piéton sur la peau externe 31 du capot 23.

Dans une variante de réalisation non illustrée aux figures, la zone de découpe 37 n'est pas pratiquée sur toute la longueur de la pente d'emboutissage 39, mais sur une partie seulement de la pente d'emboutissage 39, c'est-à-dire que la zone de découpe 37 s'étend depuis la fente 27 dans la pente d'emboutissage 39, sans atteindre le rayon supérieur 43.

La rupture de continuité dans la pente d'emboutissage 39 au niveau de la zone de découpe 37 permet aussi à la doublure interne 29 de s'effondrer au niveau de la zone de découpe 37 lorsqu'un effort est exercé sur la peau externe 31 (visible à la figure 4), effort pouvant survenir en cas de choc piéton, notamment par l'action de la tête d'un piéton sur la peau externe 31 du capot 23.

Grâce à l'invention, la rigidité de la doublure interne 29 est réduite au niveau de la zone d'interfaçage 33 destinée à recevoir une languette d'aide au positionnement du dispositif d'insonorisation, contrairement aux doublures internes de l'art antérieur qui ne sont pas structurellement affaiblies à cet endroit.

Cela permet très avantageusement d'augmenter la déformation du capot 23 lors d'un choc avec un piéton, réduisant ainsi considérablement le risque d'infliger de graves blessures au piéton.

La présente invention a été décrite en référence à une doublure interne 29 comportant deux zones d'interfaçage 33. Toutefois, la présente invention peut être mise en œuvre dans une doublure interne 29 comportant davantage de zones d'interfaçage 33.

Comme il va de soi, la présente invention ne se limite pas aux seules formes de réalisation de cette doublure interne de capot pour véhicule automobile, de ce capot pour véhicule automobile et de ce véhicule automobile comportant un tel capot, décrites cidessus uniquement à titre d'exemples illustratifs.

## Revendications

1. Doublure interne (29) pour capot (23) de véhicule automobile (21) comportant :
- au moins une zone d'interfaçage (33), destinée à recevoir une languette (9) d'aide au positionnement d'un dispositif d'insonorisation,
- une pluralité de zones d'affaiblissement (11, 13) comportant des découpes (15, 17) pratiquées dans ladite doublure interne (29) de part et d'autre de ladite au moins une zone d'interfaçage (33),
- et au moins une zone de découpe (37) supplémentaire s'étendant depuis ladite au moins une zone d'interfaçage (33),
**caractérisée en ce que** ladite au moins une zone d'interfaçage (33) comporte une fente (27) s'étendant transversalement relativement à ladite doublure interne (29), et **en ce que** ladite au moins une zone de découpe (37) supplémentaire s'étend depuis ladite fente (27).

2. Doublure interne (29) selon la revendication 1, **caractérisée en ce que** ladite zone de découpe (37) supplémentaire s'étend perpendiculairement relativement à ladite fente (27).

3. Doublure interne (29) selon l'une quelconque des revendications 1 ou 2, **caractérisée en ce que** ladite zone de découpe (37) supplémentaire présente une forme géométrique sensiblement rectangulaire, dont la largeur est comprise entre environ 30 millimètres et environ 50 millimètres.

4. Doublure interne (29) selon l'une quelconque des revendications 1 à 3, **caractérisée en ce que** ladite zone de découpe (37) supplémentaire présente une forme géométrique sensiblement rectangulaire, dont la longueur est comprise entre environ 40 millimètres et environ 55 millimètres.

5. Doublure interne (29) selon l'une quelconque des revendications 2 à 4, **caractérisée en ce que** ladite zone de découpe (37) supplémentaire est pratiquée dans une pente d'emboutissage (39) de la doublure interne (29) ladite pente d'emboutissage (39) reliant, d'une part, un rayon inférieur (41) s'étendant sensiblement dans la continuité de ladite fente (27) de manière sensiblement transversale, et, d'autre part, un rayon supérieur (43) s'étendant de façon adjacente à une piste (45) destinée à recevoir des cordons de collage destinés à assurer la liaison de ladite doublure interne (29) avec une peau externe (31) de capot (23).

6. Doublure interne (29) selon la revendication 5, **caractérisée en ce que** la zone de découpe (37) supplémentaire est pratiquée sur toute la longueur de ladite pente d'emboutissage (39).

7. Doublure interne (29) selon la revendication 5, **caractérisée en ce que** la zone de découpe (37) supplémentaire est pratiquée sur une portion de ladite pente d'emboutissage (39).

8. Capot (23) de véhicule automobile (21) comportant une peau externe (31) et une doublure interne (29), ladite peau externe (31) et ladite doublure interne (29) étant fixées l'une par rapport à l'autre, **caractérisé en ce que** ladite doublure interne (29) est obtenue selon l'une quelconque des revendications 1 à 7.

9. Véhicule automobile (21) comportant un capot (23), **caractérisé en ce que** ledit capot (23) est obtenu selon la revendication 8.

## Patentansprüche

1. Innenfutter (29) für die Motorhaube (23) eines Kraftfahrzeugs (21) mit:
- mindestens einem Schnittstellenbereich (33) zur Aufnahme einer Lasche (9) zur Unterstützung der Positionierung einer Schallschutzvorrichtung,
- eine Vielzahl von Schwächungszonen (11, 13) mit Ausschnitten (15, 17), die in der inneren Auskleidung (29) beiderseits der wenigstens einen Schnittfläche (33) ausgebildet sind,
- und mindestens einem zusätzlichen Schneidebereich (37), der sich von dem mindestens einen Schnittbereich (33) erstreckt,
Der wenigstens eine Schnittstellenbereich (33) hat einen Schlitz (27), der sich quer zu der inneren Auskleidung (29) erstreckt, **dadurch gekennzeichnet, dass** sich der wenigstens eine zusätzliche Schnittbereich (37) von dem Schlitz (27) erstreckt.

2. Innenfutter (29) nach Anspruch 1, **dadurch gekennzeichnet, dass** sich die weitere Schneidzone (37) senkrecht zu dem Schlitz (27) erstreckt.

3. Innenfutter (29) nach einem der Ansprüche 1 oder 2, **dadurch gekennzeichnet, dass** die zusätzliche Schneidzone (37) eine im Wesentlichen rechteckige geometrische Form aufweist, deren Breite zwischen etwa 30 mm und etwa 50 mm liegt.

4. Innenfutter (29) nach einem der Ansprüche 1 bis 3, **dadurch gekennzeichnet, dass** die zusätzliche Schneidzone (37) eine im Wesentlichen rechteckige geometrische Form aufweist, deren Länge zwischen etwa 40 mm und etwa 55 mm liegt.

5. Innenfutter (29) nach einem der Ansprüche 2 bis 4, **dadurch gekennzeichnet, dass** der zusätzliche Schneidbereich (37) in einer Tiefziehschräge (39) des Innenfutters (29) ausgebildet ist, wobei die Tiefziehschräge (39) einerseits einen unteren Radius (41), der sich im Wesentlichen in der Kontinuität des Schlitzes (27) in einer im Wesentlichen transversalen Weise erstreckt, und andererseits einen oberen Radius (43), der sich benachbart zu einer Bahn (45) erstreckt, verbindet Zur Aufnahme von Klebeschnüren zur Verbindung der Innenauskleidung (29) mit einer Außenhaut (31) der Haube (23).

6. Innenfutter (29) nach Anspruch 5, **dadurch gekennzeichnet, dass** der zusätzliche Schneidebereich (37) über die gesamte Länge der Tiefziehschräge (39) ausgebildet ist.

7. Innenfutter (29) nach Anspruch 5, **dadurch gekennzeichnet, dass** der zusätzliche Schneidebereich (37) an einem Abschnitt der Tiefziehschräge (39) ausgebildet ist.

8. Motorfahrzeughaube (23) (21) mit einer Außenhaut (31) und einer Innenauskleidung (29), wobei die Außenhaut (31) und die Innenauskleidung (29) in Bezug aufeinander befestigt sind, **dadurch gekennzeichnet, dass** die Innenauskleidung (29) nach einem der Ansprüche 1 bis 7 erhalten ist.

9. Kraftfahrzeug (21) mit einer Haube (23), **dadurch gekennzeichnet, dass** die Haube (23) nach Anspruch 8 erhalten ist.

## Claims

1. Internal liner (29) for a bonnet (23) of a motor vehicle (21) comprising:
at least one interfacing zone (33), intended for a tongue (9) for assisting in the positioning of a soundproofing device,
plurality of attenuation zones (11, 13) comprising cutouts (15, 17) made in said inner lining (29) on either side of said at least one interfacing zone (33),
and at least one additional cutting zone (37) extending from said at least one interfacing zone (33),
wherein said at least one interfacing zone (33) comprises a slot (27) extending transversely relative to said inner lining (29), wherein said at least one additional cutting zone (37) extends from said slot (27).

2. The inner lining (29) according to claim 1, wherein said additional cutting zone (37) extends perpendicularly relative to said slot (27).

3. Internal lining (29) according to any one of Claims 1 or 2, **characterised in that** said additional cutting zone (37) has a substantially rectangular geometric shape, the width of which is between approximately 30 millimetres and approximately 50 millimetres.

4. Internal lining (29) according to any one of Claims 1 to 3, **characterised in that** said additional cutting zone (37) has a substantially rectangular geometric shape, the length of which is between approximately 40 millimetres and approximately 55 millimetres.

5. Inner lining (29) according to any one of Claims 2 to 4, **characterised in that** said additional cutting zone (37) is made in a stamping slope (39) of the inner lining (29) of said stamping slope (39) connecting, on the one hand, a lower radius (41) extending substantially in the continuity of said slot (27) in a substantially transverse manner, and, on the other hand, an upper radius (43) extending adjacent to a track (45) intended for bonding beads intended to ensure the connection of said inner lining (29) with an outer skin (31) of cover (23).

6. The inner lining (29) according to claim 5, wherein the additional cutting zone (37) is made over the entire length of said stamping slope (39).

7. The inner lining (29) according to claim 5, wherein the additional cutting zone (37) is made on a portion of said stamping slope (39).

8. Motor vehicle hood (23) (21) comprising an outer skin (31) and an inner lining (29), said outer skin (31) and said inner lining (29) being fixed to each other by report, wherein said inner lining (29) is obtained according to any one of Claims 1 to 7.

9. Motor vehicle (21) comprising a hood (23), **characterised in that** said hood (23) is obtained according to Claim 8.
